# EUROPÄISCHE PATENTSCHRIFT

(11) **EP 1 886 198 B1**
(45) Veröffentlichungstag und Bekanntmachung des Hinweises auf die Patenterteilung: **05.01.2011**
(21) Anmeldenummer: 05753623.7
(22) Anmeldetag: 01.06.2005
(51) Int. Cl.: G05B 19/042

(54) **PARAMETRIERUNGSGERÄT UND VERFAHREN ZUM PARAMETRIEREN ELEKTRISCHER GERÄTE**
PARAMETERIZATION DEVICE AND METHOD FOR PARAMETERIZING ELECTRICAL DEVICES
APPAREIL DE PARAMETRAGE ET PROCEDE DE PARAMETRAGE D'APPAREILS ELECTRIQUES

(43) Veröffentlichungstag der Anmeldung: 13.02.2008
(73) Patentinhaber: SIEMENS AKTIENGESELLSCHAFT, 80333 München (DE)
(72) Erfinder: SCHRÖDEL, Oliver, 91220 Schnaittach (DE); RÜCKL, Uwe, 13591 Berlin (DE)
(86) Internationale Anmeldenummer: PCT/DE2005/001005
(87) Internationale Veröffentlichungsnummer: WO 2006/128395

(56) Entgegenhaltungen:
- WO-A-03/056423
- US-A1- 2003 061 335

## Beschreibung

Die Erfindung bezieht sich auf ein Parametrierungsgerät zum Erzeugen von geräteindividuelle Betriebsparameter festlegenden Parametrierungssignalen für ein oder mehrere elektrische Geräte einer elektrischen Anordnung. Unter dem Begriff "Parametrieren" wird nachfolgend die Eingabe vorgegebener Betriebsparameter in elektrische Geräte verstanden, wobei die Betriebsparameter die Funktionsweise bzw. den Funktionsumfang der Geräte festlegen; die Eingabe der Betriebsparameter erfolgt mithilfe von Parametrierungssignalen, die die Betriebsparameter an die Geräte übermitteln.

Zur Planung und Projektierung elektrischer Anordnungen, beispielsweise Komplexer elektrischer Anlagen - wie z. B. elektrischer Stationsleitsysteme -, sowie zur Parametrierung einzelner Geräte derartiger elektrischer Anordnungen - wie zum Beispiel von Schutzgeräten - stehen heutzutage kommerzielle Planungs- und Parametrierungshilfsmittel zur Verfügung. Aus dem Dokument US 2003/061335 A1 ist ein Verfahren zum Parametrieren mehrerer elektrischen Geräte bekannt, wobei die Vorgabe konkreter Geräteparameter erst nach der Auswahl der konkreten Geräte geschieht. Ein bekanntes Parametrierungshilfsmittel (fachsprachlich auch "Parametrierungstool" genannt) wird beispielsweise durch das Parametrierungsprogramm DIGSI der Siemens AG gebildet; nach einer Inbetriebnahme auf einer Datenverarbeitungsanlage wird durch das Parametrierungsprogramm DIGSI ein Parametrierungsgerät gebildet.

Bei diesem vorbekannten Parametrierungstool muss bedienerseitig zunächst konkret festgelegt werden, welche Geräte (also z. B. Gerätetyp, Geräteversion, Geräteausstattung) zum Aufbau der elektrischen Anlage verwendet werden und dementsprechend parametriert werden sollen; hierzu muss der Bediener des Parametrierungstools zunächst alle zu parametrierenden Geräte aus einem sehr umfangreichen Gerätekatalog mit zum Teil über hundert geeigneten Geräten auswählen. Erst nach der Auswahl der konkreten Geräte kann mit der eigentlichen Parametrierung, also der Vorgabe konkreter Geräteparameter, begonnen werden. Stellt der Benutzer des Parametrierungstools während seiner Arbeit fest, dass er zu Beginn ein falsches Gerät ausgewählt hat, mit dem sich die gewünschten Funktionen nicht erfüllen bzw. die gewünschten Betriebsparameter nicht einstellen lassen oder das das ursprünglich benutzerseitig angenommene Mengengerüst bzw. den ursprünglich benutzerseitig angenommenen Leistungsumfang nicht aufweist, so muss er anstelle des zuvor gewählten Gerätes ein neues Gerät auswählen und mit der Eingabe der gewünschten Betriebsparameter erneut beginnen.

Der Erfindung liegt die Aufgabe zugrunde, ein Parametrierungsgerät anzugeben, das eine besonders große Bedienerfreundlichkeit aufweist und das eine Parametrierung elektrischer Geräte mit sehr wenig Zeitaufwand und damit besonders kostengünstig ermöglicht.

Diese Aufgabe wird erfindungsgemäß durch ein Parametrierungsgerät mit den Merkmalen gemäß Anspruch 1 gelöst.

Danach ist erfindungsgemäß ein Parametrierungsgerät mit einer Eingabeeinrichtung vorgesehen, in die benutzerseitig gewünschte Betriebsfunktionen für die einzelnen Geräte geräteunabhängig eingebbar sind. Außerdem ist eine Speichereinrichtung vorhanden, in der eine Vielzahl elektrischer Geräte mit ihren Betriebsfunktionen und ihren geräteindividuellen Betriebsparametern erfasst sind. Eine Verarbeitungseinrichtung dient dazu, die benutzerseitig eingegebenen Betriebsfunktionen auszuwerten und aus der Speichereinrichtung eine Liste mit allen denjenigen Geräten auszulesen, die die benutzerseitig gewünschten Betriebsfunktionen erfüllen. Mit einer Ausgabeeinrichtung wird die Liste dem Benutzer zur Geräteauswahl zugeführt. Eine Signalerzeugungseinrichtung dient dazu, für jedes benutzerseitig ausgewählte Gerät jeweils diejenigen Parametrierungssignale zu erzeugen, die den in der Speichereinrichtung abgespeicherten Betriebsparametern entsprechen.

Ein wesentlicher Vorteil des erfindungsgemäßen Parametrierungsgerätes ist darin zu sehen, dass bei diesem die Reihenfolge der Parametrierungsschritte gegenüber dem erläuterten Stand der Technik quasi umgedreht wird und es somit zu keiner falschen Geräteauswahl und zu keiner unnützen Parametereingabe kommen kann: So ermöglicht die Eingabeeinrichtung des erfindungsgemäßen Parametrierungsgerätes nämlich die Eingabe benutzerseitig gewünschter Betriebsfunktionen in geräteunabhängiger Form; dies bedeutet, dass anstelle konkreter gerätespezifischer Betriebsparameter lediglich geräteunabhängig Funktionen definiert werden, wie beispielsweise Schutzfunktionen (Distanzschutz, Differentialschutz, usw.), Ein- und/oder Ausgabefunktionen, Anzahl der Ein- und Ausgänge, etc.. Die Eingabe der gewünschten Funktionen lässt sich abschließen, noch bevor benutzerseitig konkrete elektrische Geräte - z. B. Schutzgeräte oder dergleichen - ausgewählt worden sind; diese Vorgehensweise wird durch die Speichereinrichtung ermöglicht, die die eingegebenen Funktionen geräteunabhängig abspeichert, sowie durch die Verarbeitungseinrichtung, die die eingegebenen Funktionen weiter verarbeitet. Erst nachdem alle gewünschten Funktionen eingegeben sind, fordert das erfindungsgemäße Parametrierungsgerät dazu auf, jeweils konkrete zu parametrierende Geräte festzulegen; hierzu erstellt die Verarbeitungseinrichtung eine Liste aller derjenigen Geräte, die geeignet sind, die benutzerseitig gewünschten Funktionen bzw. Betriebsparameter zu erfüllen. Die entsprechende Liste wird dem Benutzer durch die Ausgabeeinrichtung des erfindungsgemäßen Parametrierungsgerätes - z. B. auf einem Bildschirm oder in anderer Form - zugeführt, so dass benutzerseitig lediglich diejenigen Geräte ausgewählt werden können, die für die gewünschten Anwendungen geeignet sind. Zu einer falschen Geräteauswahl und damit einhergehend zu einer unnützen Parametereingabe kann es bei dem erfindungsgemäßen Parametrierungsgerät also nicht kommen. Erst nach der Auswahl der gewünschten Geräte erfolgt die "eigentliche" Parametrierung durch die Signalerzeugungseinrichtung selbsttätig, indem diese in Anhängigkeit von den eingegebenen geräteunabhängigen Betriebsfunktionen sowie in Abhängigkeit von den jeweils ausgewählten Geräten die geräteindividuellen Parametrierungssignale erzeugt.

Ein weiterer wesentlicher Vorteil der Erfindung ist darin zu sehen, dass die "Hardware", also die verwendeten Geräte der elektrischen Anordnung, sehr leicht ersetzt werden kann, beispielsweise wenn sich die Anforderungen an die Anordnung ändern: Wird beispielsweise ein Gerät ausgetauscht, so wird die Parametrierung des neuen Gerätes vom erfindungsgemäßen Parametrierungsgerät selbsttätig veranlasst, nachdem dieses benutzerseitig ausgewählt worden ist, indem auf die benutzerseitig eingegebenen geräteunabhängigen Betriebsfunktionen zurückgegriffen wird. Beispielsweise kann in dieser Weise ein Schutzgerät mit acht binären Ein-/Ausgängen ohne Probleme auf 16 binäre Ein-/Ausgänge erweitert werden, wobei die restlichen Funktionen einfach unverändert übernommen werden; die Erzeugung der konkreten Parametrierungssignale erfolgt - wie bereits erläutert - anschließend durch die Signalerzeugungseinrichtung des Parametrierungsgeräts.

Ein dritter wesentlicher Vorteil der Erfindung besteht darin, dass sich die Anforderungen an die Geräte der Anordnung sehr leicht auch nachträglich modifizieren lassen: Sollen beispielsweise Funktionen der bereits parametrierten Geräte wegfallen oder hinzugefügt werden, so sind benutzerseitig lediglich die Funktionsänderungen einzugeben; ist nach einer solchen Funktionsänderung eine Neuauswahl besser geeigneter oder kostengünstigerer Geräte als zuvor (beispielsweise im Falle eines Wegfalls von zuvor definierten Betriebsfunktionen) möglich, so kann diese beispielsweise vom erfindungsgemäßen Parametrierungsgerät über die Verarbeitungseinrichtung selbsttätig veranlasst werden, ohne dass benutzerseitig diesbezüglich Vorkehrungen zu treffen wären. Wird im Folgenden ein Ersatzgerät eingesetzt, so erfolgt eine Parametrierung dieses neuen Gerätes - wie erläutert - durch die Signalerzeugungseinrichtung selbsttätig, indem auf die eingegebenen Betriebsfunktionen zurückgegriffen wird.

Die geräteindividuellen Parametrierungssignale können unmittelbar an die Geräte übermittelt werden, sofern diese schon an das Parametrierungsgerät angeschlossen sind; alternativ können die Parametrierungssignale auch zunächst zwischengespeichert und zu einem späteren Zeitpunkt an das jeweilige Gerät zu dessen Parametrierung weitergeleitet werden. Auch ist es denkbar, dass es zu einer Erzeugung der Parametrierungssignale durch die Signalerzeugungseinrichtung erst dann kommt, wenn die zu parametrierenden Geräte an die Anordnung angeschlossen sind.

Vorzugsweise erfolgt die Eingabe der geräteunabhängigen Betriebsfunktionen über eine Auswahl an vordefinierten applikationsspezifischen Lösungen bzw. Standardfunktionen, die bereits parametrierungsgeräteseitig zur Verfügung gestellt werden und benutzerseitig nur noch ausgewählt werden müssen.

Die Erfindung kann beispielsweise bei Stationsleitsystemen eingesetzt werden, die mit mehreren Feldgeräten, beispielsweise Schutzgeräten, ausgestattet sind. Beispielsweise ist in einem solchen Falle an zumindest eines der Feld- bzw. Schutzgeräte das erfindungsgemäße Parametrierungsgerät angeschlossen, das mit seiner Signalerzeugungseinrichtung die Parametrierungssignale erzeugt und diese in das Feld- bzw. Schutzgerät einspeist.

Die Erfindung bezieht sich außerdem auf ein Verfahren zum Erzeugen von geräteindividuelle Betriebsparameter festlegenden Parametrierungssignalen für ein oder mehrere elektrische Geräte.

Um bei einem solchen Verfahren eine besonders große Bedienerfreundlichkeit zu erreichen und zu ermöglichen, dass eine Parametrierung elektrischer Geräte mit möglichst geringem Zeitaufwand durchführbar ist, wird erfindungsgemäß ein Verfahren vorgeschlagen, bei dem benutzerseitig gewünschte Betriebsfunktionen für die einzelnen Geräte geräteunabhängig eingeben werden, die benutzerseitig eingegebenen Betriebsfunktionen ausgewertet werden, indem aus einer Speichereinrichtung, in der eine Vielzahl elektrischer Geräte mit ihren Betriebsfunktionen und ihren geräteindividuellen Betriebsparametern erfasst sind, eine Liste mit allen denjenigen Geräten ausgelesen wird, die die benutzerseitig gewünschten Betriebsfunktionen erfüllen, die Liste dem Benutzer zur Geräteauswahl zugeführt wird und für jedes benutzerseitig ausgewählte Gerät jeweils diejenigen Parametrierungssignale erzeugt werden, die den in der Speichereinrichtung abgespeicherten Betriebsparametern entsprechen.

Bezüglich der Vorteile des erfindungsgemäßen Verfahrens wird auf die obigen Ausführungen im Zusammenhang mit dem erfindungsgemäßen Parametrierungsgerät verwiesen.

Vorzugsweise erfolgt vor dem Zuführen der Liste zu dem Benutzer eine Filterung der Liste oder ein Sortieren der Liste nach benutzerseitig vorgegebenen Kriterien. Beispielsweise erfolgt das Sortieren oder Filtern nach Gerätekosten.

Die Erfindung wird nachfolgend anhand eines Ausführungsbeispiels erläutert. Dabei zeigen
- Figur 1: ein Ausführungsbeispiel eines erfindungsgemäßen Stationsleitsystems mit mehreren Schutzgeräten so- wie einem daran angeschlossenen erfindungsgemäßen Parametrierungsgerät und
- Figur 2: ein Ausführungsbeispiel für den konkreten Aufbau des Parametrierungsgerätes gemäß Figur 1.

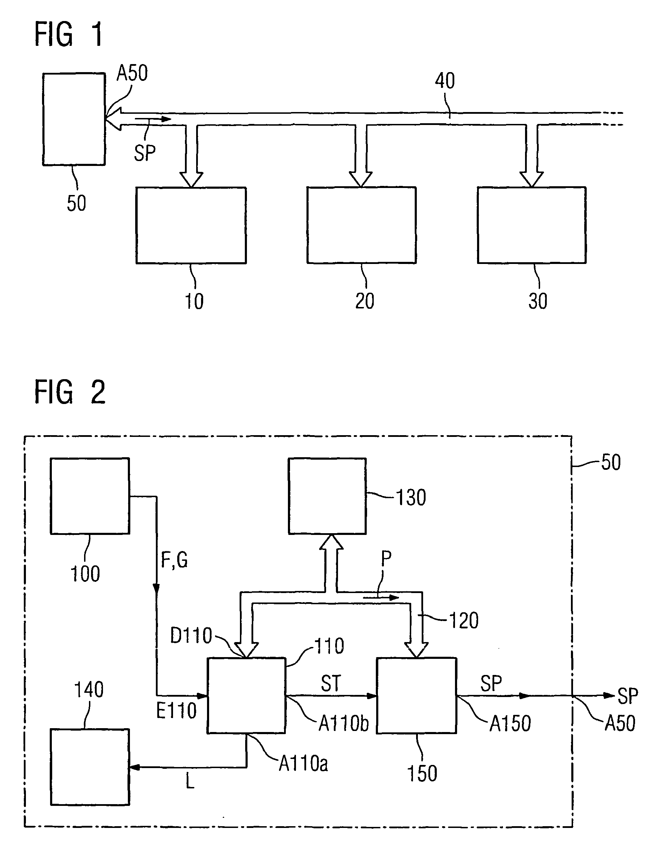

In der Figur 1 erkennt man drei Schutzgeräte 10, 20 und 30, die zu einem in der Figur 1 nicht weiter dargestellten Stationsleitsystem gehören. Die drei Schutzgeräte 10, 20 und 30 sind mittels eines externen Datenbusses 40 mit einem Parametrierungsgerät 50 verbunden. Das Parametrierungsgerät 50 dient dazu, Parametrierungssignale SP zu erzeugen und zu den drei Schutzgeräten 10, 20 und 30 zu übertragen. Mit den Parametrierungssignalen SP wird die konkrete Funktionsweise der Schutzgeräte 10, 20 und 30 definiert bzw. eingestellt.

In der Figur 2 ist der konkrete Aufbau des Parametrierungsgerätes 50 gemäß Figur 1 gezeigt. Man erkennt, dass das Parametrierungsgerät 50 eine Eingabeeinrichtung 100 aufweist, die mit einem Eingang E110 einer Verarbeitungseinrichtung 110 verbunden ist. Die Verarbeitungseinrichtung 110 ist über einen Datenanschluss D110 mit einem internen Datenbus 120 verbunden, der mit einer Speichereinrichtung 130 in Verbindung steht.

Die Verarbeitungseinrichtung 110 steht außerdem mit einem Ausgang A110a sowie mit einem weiteren Ausgang A110b mit einer Ausgabeeinrichtung 140 sowie mit einer Signalerzeugungseinrichtung 150 in Verbindung. Ein Ausgang A150 der Signalerzeugungseinrichtung 150 bildet den Ausgang A50 des Parametrierungsgerätes 50, der mit dem externen Datenbus 40 gemäß

Figur 1 verbunden ist.

Die Funktionsweise der Anordnung gemäß Figur 1 sowie die Funktionsweise des Parametrierungsgerätes 50 gemäß Figur 2 wird nachfolgend im Detail erläutert:
Mit dem Parametrierungsgerät 50 wird zunächst eine Planung und Projektierung des Stationsleitsystems gemäß Figur 1 durchgeführt. Im Rahmen dieser Planung und Projektierung wird mittels der Eingabeeinrichtung 100 festgelegt, welche Betriebsfunktionen die Schutzgeräte 10 bis 30 aufweisen wollen.
Die Eingabe der Betriebsfunktionen F erfolgt dabei geräteunabhängig; dies bedeutet, dass die Eingabe der Betriebsfunktionen F noch unabhängig von der konkreten Auswahl der einzelnen Schutzgeräte 10 bis 30 erfolgt und lediglich festgelegt wird, welche "Grundfunktion" die Schutzgeräte 10 bis 30 jeweils aufweisen sollen. Geräteunabhängige Betriebsfunktionen können beispielsweise durch die Schutzfunktionen selbst, die Eingabe-/Ausgabefunktionen oder sonstige Funktionen festgelegt sein. Als Schutzfunktion kann beispielsweise festgelegt sein, ob es sich um ein Differentialschutzgerät oder ein Distanzschutzgerät oder dergleichen handelt.

Nachdem eine Eingabe der benutzerseitig gewünschten Betriebsfunktionen erfolgt ist, werden die eingegebenen Betriebsfunktionen in der Verarbeitungseinrichtung 110 weiter verarbeitet. Hierzu vergleicht die Verarbeitungseinrichtung 110 die eingegebenen Betriebsfunktionen mit in der Speichereinrichtung 130 abgespeicherten Betriebsfunktionen. Zu diesem Vergleich werden die benutzerseitig eingegebenen Betriebsfunktionen über den internen Datenbus 120 zur Speichereinrichtung 130 übertragen und dort mit den abgespeicherten Datensätzen abgeglichen.

In der Speichereinrichtung 130 sind hierzu verschiedene Geräte, insbesondere Schutzgeräte, mit ihren Betriebsfunktionen sowie zusätzlich mit ihren geräteindividuellen Betriebsparametern, die zur Inbetriebnahme der jeweiligen Betriebsfunktionen eingestellt werden müssen, abgespeichert. Durch den beschriebenen Datenabgleich stellt die Verarbeitungseinrichtung 110 fest, welche der in der Speichereinrichtung 130 abgespeicherten Geräte prinzipiell in der Lage sind, die benutzerseitig gewünschten Betriebsfunktionen zu erfüllen. Alle geeigneten Geräte werden in einer Liste L zusammengestellt und mittels der Ausgabeeinrichtung 140, bei der es sich beispielsweise um einen Monitor oder dergleichen handeln kann, dem Benutzer angezeigt. Der Benutzer des Parametrierungsgerätes 50 hat nun Gelegenheit, aus der Liste das jeweils gewünschte Gerät auszuwählen.

Vorzugsweise wird der Benutzer das jeweils kostengünstigste Gerät auswählen, um eine möglichst kostengünstige Realisierung des Stationsleitsystems gemäß Figur 1 sicherzustellen. Um eine Auswahl der Schutzgeräte 10 bis 30 nach Kostengesichtspunkten zu vereinfachen, kann die Liste mit den geeigneten Schutzgeräten beispielsweise nach Kostengesichtspunkten derart sortiert sein, dass die geeigneten, besonders kostengünstigen Geräte zuerst und teurere Geräte erst nachfolgend aufgelistet sind. Alternativ kann eine Priorisierung oder Filterung von Geräten oder von Geräteklassen nach Kundenvorgaben (kundenspezifische Vorzugsgeräte oder Vorzugsklassen) durchgeführt werden.

Sobald benutzerseitig mittels der Eingabeeinrichtung 100 die gewünschten Schutzgeräte 10 bis 30 mittel Eingabesignale G ausgewählt worden sind, kann die Parametrierung der Schutzgeräte 10 bis 30 erfolgen. Hierzu steuert die Verarbeitungseinrichtung 110 die Signalerzeugungseinrichtung 150 mit Steuersignalen ST an. Sobald die Signalerzeugungseinrichtung 150 die Steuersignale ST empfängt, erzeugt sie die erforderlichen Parametrierungssignale SP, die für die ausgewählten Geräte die gewünschten Betriebsfunktionen hervorrufen. Die Erzeugung der Parametrierungssignale SP in der Signalerzeugungseinrichtung 150 erfolgt dabei unter Hinzuziehung der Speichereinrichtung 130, in der für jedes Gerät die geräteindividuellen Betriebsparameter P in Abhängigkeit von den jeweils zur Verfügung stehenden Betriebsfunktionen des jeweiligen Gerätes abgespeichert sind. Um eine Datenverbindung zwischen der Signalerzeugungseinrichtung 150 und der Speichereinrichtung 130 zu ermöglichen, ist die Signalerzeugungseinrichtung 150 ebenfalls mit dem internen Datenbus 120 verbunden.

Um eine besonders einfache Eingabe der benutzerseitig gewünschten Betriebsfunktionen zu erreichen, ist die Eingabeeinrichtung 100 vorzugsweise derart ausgestaltet, dass sie die Eingabe der Betriebsfunktionen über eine Auswahl an vordefinierten applikationsspezifischen Lösungen ermöglicht; dies bedeutet beispielsweise, dass auswählbare Betriebsfunktionen dem Benutzer über pull-down-Menüs oder dergleichen angeboten werden, so dass dieser lediglich eine Auswahl treffen muss. Eine derart vorbereitete Auswahl an vordefinierten Lösungen bietet den Vorteil, dass eine fehlerhafte Definition von Funktionen durch den Benutzer sehr zuverlässig vermieden wird.

### Bezugszeichenliste

- 10: Schutzgerät
- 20: Schutzgerät
- 30: Schutzgerät
- 40: externer Datenbus
- 50: Parametrierungsgerät
- 100: Eingabeeinrichtung
- 110: Verarbeitungseinrichtung
- 120: interner Datenbus
- 130: Speichereinrichtung
- 140: Ausgabeeinrichtung
- 150: Signalerzeugungseinrichtung
- G: Eingabesignale
- L: Liste
- F: Betriebsfunktionen
- P: Betriebsparameter

## Patentansprüche

1. Parametrierungsgerät (50) zum Erzeugen von geräteindividuelle Betriebsparameter (P) festlegenden Parametrierungssignalen (SP) für ein elektrisches Gerät oder mehrere elektrische Geräte (10, 20, 30) einer elektrischen Anordnung,
- mit einer Eingabeeinrichtung (100), in die benutzerseitig gewünschte Betriebsfunktionen (F) für das Gerät oder die Geräte geräteunabhängig eingebbar sind,
- mit einer Speichereinrichtung (130), in der eine Vielzahl elektrischer Geräte mit ihren Betriebsfunktionen und ihren jeweiligen geräteindividuellen Betriebsparametern (P) erfasst sind,
- einer Verarbeitungseinrichtung (110), die die benutzerseitig eingegebenen Betriebsfunktionen (F) auswertet und aus der Speichereinrichtung eine Liste (L) mit allen denjenigen Geräten ausliest, die die benutzerseitig gewünschten Betriebsfunktionen erfüllen,
- einer Ausgabeeinrichtung (140), mit der die Liste dem Benutzer zur Geräteauswahl zugeführt wird, und
- einer Signalerzeugungseinrichtung (150), die für jedes benutzerseitig ausgewählte Gerät jeweils diejenigen Parametrierungssignale (SP) erzeugt, die den in der Speichereinrichtung abgespeicherten Betriebsparametern (P) entsprechen.

2. Parametrierungsgerät nach Anspruch 1,
**dadurch gekennzeichnet, dass**
die Eingabeeinrichtung (100) derart ausgestaltet ist, dass sie die Eingabe der geräteunabhängigen Betriebsfunktionen (F) über eine Auswahl an vordefinierten applikationsspezifischen Standardfunktionen ermöglicht.

3. Stationsleitsystem mit mehreren Feldgeräten, insbesondere Schutzgeräten,
**dadurch gekennzeichnet, dass**
an zumindest eines der Feldgeräte ein Parametrierungsgerät (50) nach Anspruch 1 oder 2 angeschlossen ist, wobei das Parametrierungsgerät mit seiner Signalerzeugungseinrichtung (50) aus der Speichereinrichtung (130) die geräteindividuellen Betriebsparameter (P) des angeschlossenen Feldgerätes ausliest, mit den Betriebsparametern (P) die entsprechenden Parametrierungssignale (SP) erzeugt und diese in das Feldgerät einspeist.

4. Verfahren zum Erzeugen von geräteindividuelle Betriebsparameter (P) festlegenden Parametrierungssignalen (SP) für ein oder mehrere elektrische Geräte (10, 20, 30) einer elektrischen Anordnung, bei dem
- benutzerseitig gewünschte Betriebsfunktionen (F) für das oder die einzelnen Geräte geräteunabhängig eingeben werden,
- die benutzerseitig eingegebenen Betriebsfunktionen ausgewertet werden, indem aus einer Speichereinrichtung (130), in der eine Vielzahl elektrischer Geräte mit ihren Betriebsfunktionen (F) und ihren geräteindividuellen Betriebsparametern (P) erfasst sind, eine Liste (L) mit allen denjenigen Geräten ausgelesen wird, die die benutzerseitig gewünschten Betriebsfunktionen erfüllen,
- die Liste dem Benutzer zur Geräteauswahl zugeführt wird und
- für jedes benutzerseitig ausgewählte Gerät jeweils diejenigen Parametrierungssignale (SP) erzeugt werden, die den in der Speichereinrichtung abgespeicherten Betriebsparametern (P) entsprechen.

5. Verfahren nach Anspruch 4,
**dadurch gekennzeichnet, dass**
Feldgeräte, insbesondere Schutzgeräte, eines Stationsleitsystems parametriert werden.

6. Verfahren nach Anspruch 4 oder 5,
**dadurch gekennzeichnet, dass**
vor dem Zuführen der Liste zu dem Benutzer eine Filterung der Liste oder ein Sortieren der Liste nach benutzerseitig vorgegebenen Kriterien erfolgt.

7. Verfahren nach Anspruch 6,
**dadurch gekennzeichnet, dass**
das Sortieren oder Filtern nach Gerätekosten erfolgt.

## Claims

1. Parameterization device (50) for generating parameterization signals (SP), which define device-specific operating parameters (P), for an electrical device or a plurality of electrical devices (10, 20, 30) of an electrical arrangement,
- said device having an input device (100) to which operating functions (F) which are desired by the user can be input for the device or devices in a manner independent of the devices,
- having a memory device (130) which records a multiplicity of electrical devices with their operating functions and their respective device-specific operating parameters (P),
- having a processing device (110) which evaluates the operating functions (F) which have been input by the user and reads a list (L) containing all those devices which perform the operating functions desired by the user from the memory device,
- having an output device (140) which is used to supply the list to the user for the purpose of selecting the devices, and
- having a signal generating device (150) which respectively generates those parameterization signals (SP) which correspond to the operating parameters (P) stored in the memory device for each device selected by the user.

2. Parameterization device according to Claim 1,
**characterized in that**
the input device (100) is configured in such a manner that it makes it possible to input the device-independent operating functions (F) by means of a selection of predefined application-specific standard functions.

3. Station control system having a plurality of field devices, in particular protective devices, **characterized in that**
a parameterization device (50) according to Claim 1 or 2 is connected to at least one of the field devices, the parameterization device using its signal generating device (150) to read the device-specific operating parameters (P) of the connected field device from the memory device (130), to generate the corresponding parameterization signals (SP) using the operating parameters (P) and to feed them into the field device.

4. Method for generating parameterization signals (SP), which define device-specific operating parameters (P), for one or more electrical devices (10, 20, 30) of an electrical arrangement, in which
- operating functions (F) which are desired by the user are input for the individual device or devices in a manner independent of the devices,
- the operating functions which have been input by the user are evaluated by reading a list (L) containing all those devices which perform the operating functions desired by the user from a memory device (130) which records a multiplicity of electrical devices with their operating functions (F) and their device-specific operating parameters (P),
- the list is supplied to the user for the purpose of selecting the devices, and
- those parameterization signals (SP) which correspond to the operating parameters (P) stored in the memory device are respectively generated for each device selected by the user.

5. Method according to Claim 4,
**characterized in that**
field devices, in particular protective devices, of a station control system are parameterized.

6. Method according to Claim 4 or 5,
**characterized in that**
before the list is supplied to the user, the list is filtered or sorted in accordance with criteria predefined by the user.

7. Method according to Claim 6, **characterized in that** the sorting or filtering operation is carried out on the basis of device costs.

## Revendications

1. Appareil ( 50 ) de paramétrage pour produire des signaux ( SP ) de paramétrage fixant des paramètres ( P ) de fonctionnement propres à un appareil, pour un appareil électrique ou pour plusieurs appareils ( 10, 20, 30 ) électriques d'un agencement électrique,
- comprenant un dispositif ( 100 ) d'entrée, dans lequel peuvent être entrées, indépendamment des appareils, des fonctions ( F ) de fonctionnement de l'appareil ou des appareils, qui sont souhaitées du côté de l'utilisateur,
- comprenant un dispositif ( 130 ) de mémoire, dans lequel une pluralité d'appareils électriques avec leurs fonctions de fonctionnement et leurs paramètres ( P ) de fonctionnement respectif propres à un appareil sont saisis,
- un dispositif ( 110 ) de traitement, qui exploite les fonctions ( F ) de fonctionnement entrées du côté de l'utilisateur et lit dans le dispositif de mémoire une liste ( L ) ayant tous les appareils qui satisfont la fonction du fonctionnement souhaitée du côté de l'utilisateur,
- un dispositif ( 140 ) de sortie, par lequel la liste est envoyée à l'utilisateur pour le choix des appareils, et
- un dispositif ( 150 ) de production de signal, qui produit, pour chaque appareil choisi, du côté de l'utilisateur respectivement des signaux ( SP ) de paramètre, qui correspondent aux paramètres ( P ) de fonctionnement mémorisés dans le dispositif de mémoire.

2. Appareil de paramétrisation suivant la revendication 1, **caractérisé en ce que**
le dispositif ( 100 ) d'entrée est conformé de manière à ce qu'il permette l'entrée des fonctions ( F ) de fonctionnement indépendantes des appareils par un choix de fonctions standards définies à l'avance et spécifiques à l'application.

3. Système de conduite de station ayant plusieurs appareils de terrain, notamment des appareils de protection,
**caractérisé en ce que**
un appareil ( 50 ) de paramétrisation, suivant la revendication 1 ou 2, est raccordé à au moins l'un des appareils de terrain, l'appareil de paramétrisation lisant par son dispositif ( 50 ) de production de signal dans le dispositif ( 130 ) de mémoire les paramètres ( P ) de fonctionnement, propres aux appareils, de l'appareil de terrain raccordé, produit par les paramètres ( P ) de fonctionnement les signaux ( SP ) de paramétrage correspondant et les injecte dans l'appareil de terrain.

4. Procédé de production de signaux ( SP ) de paramétrisation fixant des paramètres de fonctionnement propres à des appareils pour un ou pour plusieurs appareils ( 10, 20, 30 ) électriques d'un agencement électrique, dans lequel
- on entre indépendamment des appareils des fonctions ( F ) de fonctionnement souhaitées du côté de l'utilisateur pour l'appareil ou pour les appareils individuels,
- on exploite les fonctions de fonctionnement entrées du côté de l'utilisateur en lisant dans un dispositif ( 130 ) de mémoire, dans lequel sont saisis une pluralité d'appareils électriques avec leurs fonctions ( F ) de fonctionnement et leurs paramètres ( P ) de fonctionnement propres aux appareils, une liste ( L ) ayant tous les appareils qui satisfont les fonctions de fonctionnement souhaitées du côté de l'utilisateur,
- on envoie la liste à l'utilisateur pour le choix des appareils, et
- pour chaque appareil choisi du côté de l'utilisateur, on produit respectivement les signaux ( SP ) de paramétrisation, qui correspondent aux paramètres ( P ) de fonctionnement mémorisés dans le dispositif de mémoire.

5. Procédé suivant la revendication 4,
**caractérisé en ce que**
on paramétrise des appareils de terrain, notamment des appareils de protection, d'un système de conduite de station.

6. Procédé suivant la revendication 4 ou 5,
**caractérisé en ce qu'**avant l'envoi de la liste à l'utilisateur, on effectue un filtrage de la liste ou un tri dans la liste suivant des critères prescrits du côté de l'utilisateur.

7. Procédé suivant la revendication 6,
**caractérisé en ce que** on effectue le tri ou le filtrage en fonction des coûts des appareils.
